# EUROPEAN PATENT APPLICATION

(11) **EP 3 993 168 A1**
(43) Date of publication of application: **04.05.2022**
(21) Application number: 21183981.6
(22) Date of filing: 06.07.2021
(51) Int. Cl.: H01R 4/30, H01R 4/34, H02G 15/04

(54) **CONNECTION STRUCTURE AND METHOD OF WIRE HARNESS TERMINAL AND SOCKET**

(30) Priority: 03.11.2020 CN 202011212463
(71) Applicant: Jing-Jin Electric Technologies Co., Ltd., Beijing (CN)
(72) Inventor: Wang, Mengqi, Beijing (CN); Jin, Haitao, Beijing (CN); Zhou, Dongsheng, Beijing (CN); Liu, Chuankang, Beijing (CN); Wang, Haibin, Beijing (CN)
(74) Representative: Schwarz & Partner Patentanwälte GmbH

(57) **Abstract**

The present disclosure discloses a connection structure and method of a wire harness terminal (4) and a socket (1). In the connection structure, a nut (3) is embedded in an upper surface of the socket (1), a threaded hole (2) is provided in the nut (3) in an axial direction of the nut (3), and a pair of elastic tabs (5) protrude from two sides of an upper end surface of the nut (3), and the elastic tabs (5) are deformable so as to pre-fix the wire harness terminal (4) on the socket (1). The structure for pre-fixing the wire harness terminal (4) on the socket (1) disclosed in the above technical solution is simple in structure, low in manufacturing cost, convenient to operate, accurate in positioning, and can avoid damage to other parts.

## Description

### TECHNICAL FIELD

The present disclosure belongs to the technical field of electrical junction boxes, and particularly relates to a connection structure and method of a wire harness terminal and a socket.

### BACKGROUND

When using an electrical junction box to connect cables, it is often necessary to fix the wire harness terminal of one end at a preset position, and then connect the wire harness terminal of the other end to the junction box in the subsequent process.

For example, when the high-voltage connection of the drive motor or generator of a pure electric vehicle or a hybrid electric vehicle is conducted, a high-voltage junction box is generally used for connection, in which the three phase connection lines from the stator of the automobile motor should be connected to the three phase connection lines of the corresponding controller respectively. In most cases, the layout space is limited, and the three phase connection lines of the motor need to be pre-fixed to facilitate subsequent screw connection with the three phase connection lines of the controller on the automatic production line. However, the conventional pre-fixing processes are complicated, and their efficiency is low and labor costs are high, which negatively affects the production pace.

### SUMMARY

In view of the above problems, the present disclosure discloses a connection structure and method of a wire harness terminal and a socket to overcome the above problems or at least partially solve the above problems.

In order to achieve the above object, the present disclosure adopts the following technical solutions.

An aspect of the present disclosure discloses a connection structure of a wire harness terminal and a socket, wherein a nut is embedded in an upper surface of the socket, a threaded hole is provided in the nut in an axial direction of the nut, and a pair of elastic tabs protrudes from two sides of an upper end surface of the nut, and the elastic tabs are deformable so as to pre-fix the wire harness terminal on the socket.

Optionally, the nut and the socket are integrally formed, or are separately manufactured and then fixedly connected.

Optionally, the socket is further provided with a special-shaped boss at a position of the nut, and the position of the special-shaped boss is designed such that a through hole in the wire harness terminal is concentrically aligned with the threaded hole in the nut, and limits a position of the nut.

Optionally, the nut is made of metal and the socket is injection-molded with the nut therein, the upper end surface of the nut is provided with a stepped surface, and a part of the nut which is under the stepped surface is embedded in the socket to prevent the nut from detaching off the socket.

Optionally, a cross section of the elastic tab is crescent-shaped, or a longitudinal section of the elastic tab is L-shaped.

Optionally, when the elastic tabs on both sides of the nut are pressed and deformed, they clench the wire harness terminal; or, the wire harness terminal and the elastic tabs are connected by clamping engagement so as to fix the wire harness terminal.

Optionally, the socket is injection molded, the wire harness terminal is made of copper, and the nut is made of plastic, resin or metal.

Optionally, the connection structure further comprises a second wire harness terminal, the second wire harness terminal is provided with a through hole and is pluggable into the wire harness terminal, and the wire harness terminal and the second wire harness terminal are fixed in the threaded hole of the nut by a screw.

Optionally, the wire harness terminal is a motor wire harness terminal, the second wire harness terminal is a controller wire harness terminal, and there are a number of the sockets whose heights are same or not completely same.

Another aspect of the present disclosure discloses a connection method of the connection structure, comprising the steps of:
overlapping the motor wire harness terminal on the socket, and concentrically aligning the through hole of the motor wire harness terminal with the threaded hole of the nut by fine adjustment;
applying pressure to the elastic tabs of the nut by a tool so that the elastic tabs undergo plastic deformation and clench the motor wire harness terminal, or directly inserting the motor wire harness terminal between the elastic tabs to achieve clamping engagement so as to pre-fix the motor wire harness terminal; and
concentrically aligning the through hole of the controller wire harness terminal with the through hole of the motor wire harness terminal and the threaded hole of the nut, and then screwing a screw into the holes for fixed connection.

The advantages and beneficial effects of the present disclosure are as follows.

The structure for pre-fixing the wire harness terminal on the socket disclosed in the above technical solution is simple in structure, low in manufacturing cost, convenient to operate, accurate in positioning, and can avoid damage to other parts.

### BRIEF DESCRIPTION OF DRAWINGS

By reading the detailed description of the preferred embodiments below, various other advantages and benefits will become clear to a person of ordinary skill in the art. The drawings are only used for the purpose of illustrating the preferred embodiments, and should not be considered as a limitation to the present disclosure. Moreover, throughout the drawings, the same reference numerals are used to denote the same components. In the drawings:
FIG 1 is a schematic diagram of a connection structure of a wire harness terminal and a socket in an embodiment of the present disclosure;
FIG 2 is a schematic diagram of the structure of a nut in an embodiment of the present disclosure;

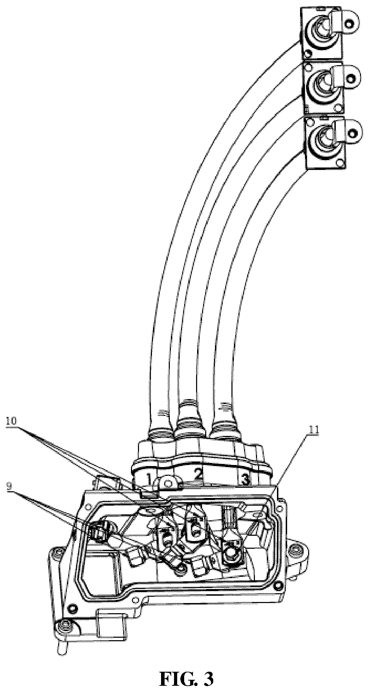

FIG 3 is a schematic diagram of a connection structure of a motor wire harness and a controller wire harness in an embodiment of the present disclosure.

In the drawings: 1: a socket; 2: a threaded hole; 3: a nut; 4: a wire harness terminal; 5: elastic tabs; 6: a socket notch; 7: a stepped surface; 8: a special-shaped boss; 9: a motor wire harness; 10: a controller wire harness; 11: a screw.

### DETAILED DESCRIPTION

In order to make the objectives, technical solutions, and advantages of the present disclosure clearer, the technical solutions of the present disclosure will be described clearly and completely in conjunction with specific embodiments of the present disclosure and corresponding drawings. Obviously, the embodiments described are only part of the embodiments of the present disclosure, rather than all of the embodiments. Based on the embodiments in the present disclosure, all other embodiments obtained by a person of ordinary skill in the art without paying creative work shall fall within the protection scope of the present disclosure.

It should be understood that the terms "include/comprise", "consisting of' or any other variants are intended to cover non-exclusive inclusion, so that a product, equipment, process or method including a series of elements not only comprises those elements, but, if necessary, may also include other elements not explicitly listed, or elements inherent to the product, equipment, process, or method. In the case that there is no more limitation, the elements defined by the phrases "include/comprise" and "consisting of..." do not exclude that the product, equipment, process or method including the named elements further includes additional named elements.

It should also be understood that orientation or positional relationship indicated by the terms "upper", "lower", "front", "rear", "left", "right", "top", "bottom", "inner", "outer", etc. are orientation or positional relationship based on the drawings, which are merely for convenience of describing the present disclosure and simplifying the description, rather than indicating or implying that the device or component referred to must have a specific orientation, or must be constructed and operated with a specific orientation, they should not be construed as limiting the present disclosure.

In the present disclosure, unless otherwise expressly defined and limited, the terms "installation", "connected", "connection" , "fixed" and the like should be broadly understood, for example, it may be fixedly connected, or detachably connected, or integrally connected; it may also be mechanically connected, or electrically connected; it may also be directly connected, or indirectly connected through an intermediate element; it may also be the internal communication of two components or the interaction relationship between two components. For a person of ordinary skill in the art, the specific meaning of the above terms in the present disclosure should be understood according to specific circumstances.

The technical solutions according to the embodiments of the present disclosure will be described in detail below with reference to the accompanying drawings.

### First Embodiment

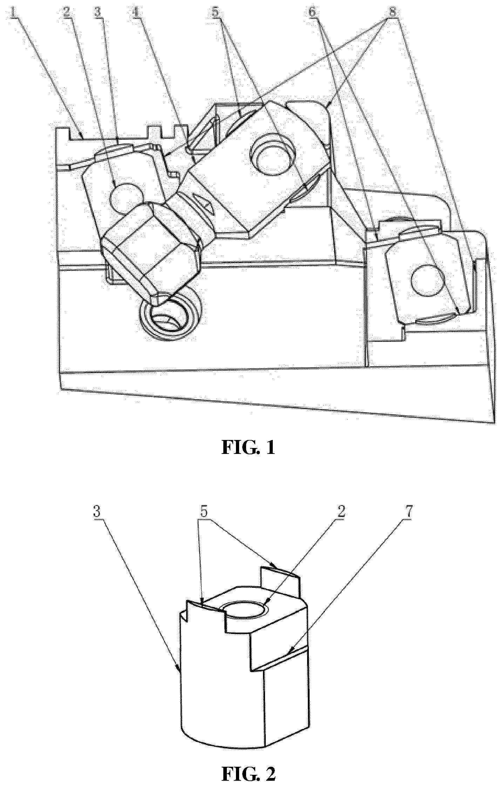

FIG 1 shows a connection structure of a wire harness terminal and a socket of the present embodiment. In the connection structure, a nut 3 is embedded in an upper surface of the socket 1, a threaded hole 2 is provided in the nut 3 in the axial direction of the nut 3, and a pair of elastic tabs 5 protrude from two sides of an upper end surface of the nut 3, and the elastic tabs 5 are deformable so as to pre-fix the wire harness terminal 4 on the socket.

Specifically, the elastic tabs 5 and the wire harness terminal 4 can be connected by clamping engagement, and the wire harness terminal 4 is inserted between the two elastic tabs. At this point, the longitudinal section of the elastic tab may be an inverted L-shape or other similar structures, so that the wire harness terminal 4 is clamped on the nut 3.

In an embodiment, especially when the nut 3 is made of metal, the elastic tabs may be pressed and deformed by a tool such as needle-nose pliers, and then clench the wire harness terminal 4. Refer to FIG. 2 which is the diagram of the structure of the nut, the cross-section of the elastic tab 5 is crescent-shaped, which facilitates the pressing operation.

In an embodiment, the nut 3 and the socket 1 may be integrally formed by a processing method such as injection molding, or they may be separately manufactured and fixedly connected together by a screw or bolt.

Preferably, the nut 3 is made of metal, and the socket 1 is made of plastic or resin. In the manufacturing process, the nut 3 is embedded into the socket 1 by injection molding, and the upper end surface of the nut 3 is provided with a stepped surface 7, so that the part of the nut 3 which is under the stepped surface 7 is embedded in the socket during the injection molding, and the exposed part is formed as a part of the socket 1, thereby preventing the nut 3 from detaching off the socket.

In an embodiment, refer to FIG 1, the socket 1 is also provided with a special-shaped boss 8 at a position of the nuts 3, and the position of the special-shaped boss is designed such that a through hole in the wire harness terminal is concentrically aligned with the threaded hole in the nut, and limits a position of the nut 3, thereby preventing the wire harness terminal 4 from detaching from a socket notch 6.

In an embodiment, the socket 1 is preferably an injection molded part, and is made of plastic or resin; the wire harness terminal 4 is generally made of copper, which is electrically conductive; the material of the nut 3 can be selected from plastic, resin or metal based on the connection method.

An embodiment also discloses the application of the above connection structure to a new energy pure electric vehicle. At this point, the connection structure further comprises a second wire harness terminal such as a terminal of a controller wire harness 10, and the wire harness terminal may be a terminal of a motor wire harness 9. The second wire harness terminal is provided with a through hole, and the wire harness terminal and the second wire harness terminal can be plugged together, and then the wire harness terminal 4 and the second wire harness terminal are fixed in the threaded hole 2 of the nut 3.

Since the motor wire harness and the controller wire harness generally transmit three phase electricity, in a preferred embodiment, there are three sockets. According to the space of the junction box, the sockets may be arranged at the same height. Alternatively, when the space in the junction box is small, the sockets may be arranged on platforms of different heights or two heights, thereby reducing the size of the junction box.

### Second Embodiment

The present embodiment first discloses a junction box. The junction box comprises a junction box body and a junction box cover, and the junction box body is provided with the above connection structure.

Further, the present embodiment also discloses a connection method of the above connection structure. The connection method comprises the following steps.

The motor wire harness terminal is overlapped on the socket 1 through the socket notch 6, the through hole of the terminal of the motor wire harness 9 and the threaded hole of the nut 3 are aligned concentrically by fine adjustment, and positioned by a special-shaped boss.

Then, the motor wire harness terminal is installed. A pressure is applied on the elastic tabs 5 of the nut 3 by a tool such as needle-nose pliers so that the elastic tabs undergo plastic deformation and clench the motor wire harness terminal. Alternatively, the motor wire harness terminal is directly inserted between the elastic tabs 5 to achieve clamping engagement so as to pre-fix the motor wire harness terminal.

In the next step, the through hole of the terminal of the controller wire harness 10 is aligned with the through hole of the terminal of the motor wire harness 9 and the threaded hole 2 of the nut 3, and then a screw 11 is screwed in the holes for fixed connection.

In sum, the above technical solutions of the connection structure and method are simple in structure, low in manufacturing cost, convenient to operate, accurate in positioning, and can avoid damage to other parts.

The above descriptions are only embodiments of the present disclosure, and are not used to limit the protection scope of the present disclosure. Any modification, equivalent replacement, improvement, expansion, etc. made within the spirit and principle of the present disclosure shall all be included in the protection scope of the present disclosure.

## Claims

1. A connection structure of a wire harness terminal (4) and a socket (1), **characterized in that**: a nut (3) is embedded in an upper surface of the socket (1), a threaded hole (2) is provided in the nut (3) in an axial direction of the nut (3), and a pair of elastic tabs (5) protrude from two sides of an upper end surface of the nut (3), and the elastic tabs (5) are deformable so as to pre-fix the wire harness terminal (4) on the socket (1).

2. The connection structure according to claim 1, **characterized in that**: the nut (3) and the socket (1) are integrally formed, or are separately manufactured and then fixedly connected.

3. The connection structure according to claim 1, **characterized in that**: the socket (1) is further provided with a special-shaped boss (8) at a position of the nut (3), and the position of the special-shaped boss (8) is designed such that a through hole in the wire harness terminal (4) is concentrically aligned with the threaded hole (2) in the nut (3), and limits a position of the nut (3).

4. The connection structure according to claim 1, **characterized in that**: the nut (3) is made of metal and the socket (1) is injection-molded with the nut (3) therein, the upper end surface of the nut (3) is provided with a stepped surface (7), and a part of the nut (3) which is under the stepped surface (7) is embedded in the socket (1) to prevent the nut (3) from detaching off the socket (1).

5. The connection structure according to claim 1, **characterized in that**: a cross section of the elastic tab is crescent-shaped, or a longitudinal section of the elastic tab is L-shaped.

6. The connection structure according to claim 1, **characterized in that**: the elastic tabs (5) on both sides of the nut (3) are pressed and deformed, and then clench the wire harness terminal (4);
or,
the wire harness terminal (4) and the elastic tab are connected by clamping engagement so as to fix the wire harness terminal (4).

7. The connection structure according to claim 1, **characterized in that**: the socket (1) is an injection molded part, the wire harness terminal (4) is made of copper, and the nut (3) is made of plastic, resin or metal.

8. The connection structure according to claim 1, **characterized in that**: the connection structure further comprises a second wire harness terminal, the second wire harness terminal is provided with a through hole and is pluggable into the wire harness terminal (4), and the wire harness terminal (4) and the second wire harness terminal are fixed in the threaded hole (2) of the nut (3) by a screw (11).

9. The connection structure according to claim 8, **characterized in that**: the wire harness terminal (4) is a motor wire harness (9) terminal, the second wire harness terminal is a controller wire harness (10) terminal, and there are a number of the sockets (1) whose heights are same or not completely same.

10. A connection method of a connection structure according to claim 9, comprising the steps of:
overlapping the motor wire harness (9) terminal on the socket (1), and concentrically aligning the through hole of the motor wire harness (9) terminal with the threaded hole (2) of the nut (3) by fine adjustment;
applying pressure to the elastic tabs (5) of the nut (3) by a tool so that the elastic tabs (5) undergo plastic deformation and clench the motor wire harness (9) terminal, or directly inserting the motor wire harness (9) terminal between the elastic tabs (5) to achieve clamping engagement so as to pre-fix the motor wire harness (9) terminal; and
concentrically aligning the through hole of the controller wire harness (10) terminal with the through hole of the motor wire harness (9) terminal and the threaded hole (2) of the nut (3), and then screwing a screw (11) into the holes for fixed connection.
